# EUROPEAN PATENT APPLICATION

(11) **EP 4 439 489 A1**
(43) Date of publication of application: **02.10.2024**
(21) Application number: 23166203.2
(22) Date of filing: 31.03.2023
(51) Int. Cl.: G06V 20/58

(54) **METHOD FOR DETERMINING A COLLISION RISK BETWEEN AN AUTONOMOUS VEHICLE AND A CHILD, METHOD FOR OPERATING AN AUTONOMOUS VEHICLE, DATA PROCESSING APPARATUS, COMPUTER PROGRAM, AND COMPUTER-READABLE STORAGE MEDIUM**

(71) Applicant: Volvo Car Corporation, 405 31 Göteborg (SE)
(72) Inventor: PEREZ BARRERA, Oswaldo, 40531 Göteborg (SE); LENNARTSSON, Anders, 40531 Göteborg (SE)
(74) Representative: Maiwald GmbH

(57) **Abstract**

The disclosure relates to a method for determining a collision risk between an autonomous vehicle (12) and a child (16a, 16b). The method comprises receiving image data (I) comprising a representation of at least one pedestrian (P). The method further comprises determining a height (H) of the at least one pedestrian (P) and/or determining an age of the at least one pedestrian (P). Moreover, the method comprises determining a pedestrian attribute (PA) characterizing the at least one pedestrian (P) and a pedestrian position indicator (PI) characterizing a position of the pedestrian (P). Based thereon, a presence of a collision risk is determined if the determined height (H) is inferior to a predefined height threshold and/or if the determined age is inferior to a predefined age threshold, if the pedestrian attribute (PA) is classified as critical, and if the pedestrian position indicator (PI) is classified as critical. Otherwise an absence of a collision risk is determined. Moreover, a method for operating an autonomous vehicle (12) is presented. Furthermore, a data processing apparatus (18), a computer program (26), and a computer-readable storage medium (24) are shown.

## Description

The present disclosure relates to a method for determining a collision risk between an autonomous vehicle and a child.

The present disclosure is further directed to a method for operating an autonomous vehicle.

Moreover, the present disclosure is directed to a data processing apparatus, a computer program, and a computer-readable storage medium.

Amongst pedestrians and other so-called vulnerable road users, children are particularly vulnerable. Moreover, a behavior of a child is usually very difficult to anticipate. This applies to the operation of both vehicles having a human driver and autonomous vehicles. In the latter case, an additional challenge lies in the fact that an autonomous vehicle cannot rely on human experience and intuition.

Before this background, it is an objective of the present disclosure to improve the detection of a collision risk between an autonomous vehicle and a child.

The problem is at least partially solved or alleviated by the subject matter of the independent claims of the present disclosure, wherein further examples are incorporated in the dependent claims.

According to a first aspect, there is provided a method for determining a collision risk between an autonomous vehicle and a child. The method comprises:
- receiving image data comprising a representation of at least one pedestrian,
- determining a height of the at least one pedestrian based on the received image data and/or determining an age of the at least one pedestrian based on the received image data,
- determining a pedestrian attribute characterizing the at least one pedestrian based on the received image data and classifying the pedestrian attribute as critical or non-critical,
- determining a pedestrian position indicator characterizing a position of the pedestrian based on the received image data and classifying the pedestrian position indicator as critical or non-critical,
- determining a presence of a collision risk
   - if the determined height of the at least one pedestrian is inferior to a predefined height threshold and/or if the determined age of the at least one pedestrian is inferior to a predefined age threshold,
   - if the pedestrian attribute is classified as critical, and
   - if the pedestrian position indicator is classified as critical, or
   otherwise determining an absence of a collision risk.

In the present disclosure, a child is to be understood as a non-adult human being. According to the present method, a representation of a child may be detected in received image data by evaluating a height of the representation of the pedestrian or by determining an age of the pedestrian being represented in the image data. Also combinations thereof are possible. This allows to reliably detect a child. Algorithms for determining a height and/or an age of a representation of the pedestrian are known as such. The method of the present disclosure further relies on determining and classifying a pedestrian attribute as well as determining and classifying a pedestrian position indicator. Thus, a presence of a collision risk is not determined for each and every detected child, but only for a child being characterized by a pedestrian attribute which is classified as critical and a child being located at a critical position. This has the effect that the presence or absence of a collision risk may be determined with high accuracy and reliability. In a case in which a child is detected, but a position of the child and/or another attribute of the child is considered to be non-critical, and absence of a collision risk is determined. Altogether, using the method of the present disclosure, a collision risk between an autonomous vehicle and the child may be determined in a very realistic manner.

The method for determining a collision risk between an autonomous vehicle and a child may be executed by a data processing apparatus of an autonomous vehicle or, alternatively, by a data processing apparatus associated with the autonomous vehicle. In the latter case, the data processing apparatus may be a server located remote from the autonomous vehicle. In all of these alternatives, the image data may be provided by a vision system of the vehicle. The vision system for example comprises one or more optical cameras.

In an example in which both a height and an age of the pedestrian are determined, the age of the pedestrian may be estimated based on the determined height. In this context, a look-up table may be used in which for each age an average height is noted.

According to an example, determining a pedestrian attribute comprises determining a pedestrian activity indicator based on the received image data. In other words, based on the received image data, an activity of the pedestrian is determined or estimated. The determined activity, which is represented by the pedestrian activity indicator, may then be classified as critical or non-critical. Based thereon, the pedestrian attribute may be critical if the pedestrian activity indicator is critical. The pedestrian attribute may be non-critical if the pedestrian activity indicator is non-critical. The pedestrian activity indicator takes into account that a collision risk may be present or absent depending on the activity of the child. Thus, by considering the pedestrian activity indicator, the determination of a collision risk is highly precise.

In an example, determining the pedestrian activity indicator comprises determining a body pose of the pedestrian based on the received image data. To this end, a body pose detection algorithm may be applied to the received image data. Body pose detection algorithms are known as such. Based on the body pose, an activity of the pedestrian may be determined with high precision and reliability. As has been mentioned before, the pedestrian's activity is represented by the pedestrian activity indicator.

In an example, the method further comprises classifying the pedestrian attribute as critical if the determined body pose is running or playing. As has been mentioned before, such a classification of a body pose may be achieved using body pose detection algorithms which are known as such. If a child is running or playing it moves comparatively fast and/or is not attentive. This means that the child may easily overlook an approaching vehicle. This constitutes a collision risk. Consequently, the pedestrian attribute is classified as critical.

According to an example, the method further comprises classifying the pedestrian attribute as non-critical if the determined body pose is walking or standing. In a case in which the child is standing, it does not move. Consequently there is no risk of collision or a risk of collision is very low. The same applies if the child is walking, i.e. moving at a relatively slow pace. Thus, the precision of the detection of a collision risk is further enhanced.

In an example, determining a pedestrian attribute comprises determining a pedestrian company indicator based on the received image data. The pedestrian attribute is classified as critical if the pedestrian company indicator describes an unaccompanied state. The pedestrian attribute is classified as non-critical if the pedestrian company indicator describes an accompanied state. The pedestrian company indicator describes whether the pedestrian, i.e. the child, is accompanied or not. The underlying rationale is that in a case in which the child is accompanied by a teenager or adult, this teenager or adult looks after the child. This reduces or eliminates a collision risk.

In an example, determining a pedestrian company indicator comprises determining whether at least two pedestrians are represented in the received image data, whether the at least two pedestrians fulfil a proximity criterion, and whether a height of at least one of the pedestrians equals or exceeds the predefined height threshold. The pedestrian company indicator describes an accompanied state if the proximity criterion is fulfilled and the height of at least one of the pedestrian equals or exceeds the predefined height threshold. The proximity criterion may relate to the fact whether a distance between the two detected pedestrians is 2 meters or lower. The distance between the pedestrians may be detected by calculating a difference between a distance between the autonomous vehicle and the first pedestrian and a distance between the autonomous vehicle and the second pedestrian. In simplified words, one may detect precisely whether the child is accompanied by an adult. If this is the case, the method may be abandoned.

In an example, determining a pedestrian attribute comprises detecting a face of the at least one pedestrian based on the received image data. The pedestrian attribute is classified as non-critical if the face is detected. The pedestrian attribute is classified as critical if the face is not detected. In a case in which a face is detected, the pedestrian needs to look into the direction of the autonomous vehicle. If this is the case, it is inferred that the pedestrian has seen the vehicle. Consequently, the absence of a collision risk is determined.

In an example, determining a pedestrian position indicator comprises determining a distance between the at least one pedestrian and the vehicle based on the received image data. The pedestrian position indicator is classified as critical if the determined distance is inferior to a predefined distance threshold. The pedestrian position indicator is classified as non-critical if the determined distance equals or exceed the predefined distance threshold. The predefined distance threshold may correspond to a stopping distance of the vehicle. Thus, it is ensured that the vehicle can stop before reaching the position of the pedestrian. In this context, the predefined distance threshold may be a function of a traveling speed of the vehicle. Consequently, independent from the actual traveling speed of the vehicle, the vehicle is able to stop before reaching the position of the pedestrian.

In an example, determining a pedestrian position indicator comprises determining a clearance between the at least one pedestrian and the road on which the vehicle is travelling based on the received image data. The pedestrian position indicator is classified as critical if the determined clearance is inferior to a predefined clearance threshold. The pedestrian position indicator is classified as non-critical if the determined clearance equals or exceed the predefined clearance threshold. The predefined clearance threshold may be 1 m or 1.5 m. Thus, the clearance describes which distance the pedestrian is keeping from the lane on which the vehicle is driving. At the same time, this is an indicator of a likelihood that the pedestrian will cross the lane or road and a time interval within which this is possible.

In an example, the method further comprises receiving vehicle speed data describing a travelling speed of the vehicle or determining a travelling speed of the vehicle based on the received image data. Additionally, the method comprises determining a presence of a collision risk, if the travelling speed exceeds a predefined speed threshold, or, otherwise, determining an absence of a collision risk. In other words, a further condition for the determination of the presence of a collision risk may be that that the vehicle travels at a certain minimal speed. This takes into account that at comparatively low speeds, a stopping distance of the autonomous vehicle may be rather short and a potential to injure the child is reduced as compared to high traveling speeds. This further enhances the precision of determining the presence or absence of a collision risk. For example, an absence of a collision risk may be determined if the vehicle is traveling at walking speed.

According to a second aspect, there is provided a method for operating an autonomous vehicle. The method comprises:
- determining a collision risk using the method of the present disclosure, and
- triggering executing a collision mitigation maneuver, if a presence of a collision risk has been determined.

Thus, due to the fact that a collision risk has been determined, the vehicle may react appropriately. Thereby, a collision between the autonomous vehicle and the pedestrian is avoided.

Examples of collision mitigation maneuvers include a lane change maneuver and/or a braking maneuver. Additionally or alternatively, the collision mitigation maneuver may comprise a warning maneuver, e.g. turning on the headlights and/or honking. The purpose of the warning maneuver is to draw the attention of the pedestrian to the autonomous vehicle. If this is the case, also the pedestrian may perform a collision mitigation activity, e.g. standing still or taking a step back. The collision mitigation activity further reduces the risk of a collision.

Both the method according to the first aspect of the present disclosure and the method of the second aspect of the present disclosure may be at least partly computer-implemented, and may be implemented in software or in hardware, or in software and hardware. Further, the methods may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to a third aspect, there is provided a data processing apparatus. The data processing apparatus comprising means for carrying out at least one of the methods of the present disclosure. This covers three alternatives. In a first alternative, the data processing apparatus comprises means for carrying out the method for determining a collision risk between an autonomous vehicle and a child. In a second alternative, the data processing apparatus comprises means for carrying out the method for operating the autonomous vehicle. In a third alternative, the data processing apparatus comprises means for carrying out both the method for determining a collision risk between an autonomous vehicle and a child and the method for operating the autonomous vehicle. Using such a data processing apparatus, a collision risk between an autonomous vehicle and a child may be determined with high precision and reliability. Moreover, by triggering an appropriate collision mitigation maneuver, a collision may be reliably avoided.

According to another aspect, there is provided a vehicle comprising a data processing apparatus according to the third aspect.

According to a fourth aspect, there is provided a computer program comprising instructions which, when the computer program is executed by a computer, cause the computer to carry out at least one of the methods of the present disclosure. The computer program may be configured according to three alternatives. In a first alternative, the computer program comprises instructions which cause the computer to carry out the method for determining a collision risk between an autonomous vehicle and a child. In a second alternative, the computer program comprises instructions which cause the computer to carry out the method for operating the autonomous vehicle. In a third alternative, the computer program comprises instructions which cause the computer to carry out both the method for determining a collision risk between an autonomous vehicle and a child and the method for operating the autonomous vehicle. Using such a computer program, a collision risk between an autonomous vehicle and a child may be determined with high precision and reliability. Moreover, by triggering an appropriate collision mitigation maneuver, a collision may be reliably avoided.

According to a fifth aspect, there is provided a computer-readable storage medium comprising instructions which, when executed by a computer, cause the computer to carry out at least one of the methods of the present disclosure. The computer-readable storage medium may be configured according to three alternatives. In a first alternative, the computer-readable storage medium comprises instructions which cause the computer to carry out the method for determining a collision risk between an autonomous vehicle and a child. In a second alternative, the computer-readable storage medium comprises instructions which cause the computer to carry out the method for operating the autonomous vehicle. In a third alternative, the computer-readable storage medium comprises instructions which cause the computer to carry out both the method for determining a collision risk between an autonomous vehicle and a child and the method for operating the autonomous vehicle. Using such a computer-readable storage medium, a collision risk between an autonomous vehicle and a child may be determined with high precision and reliability. Moreover, by triggering an appropriate collision mitigation maneuver, a collision may be reliably avoided.

It should be noted that the above examples may be combined with each other irrespective of the aspect involved.

These and other aspects of the present disclosure will become apparent from and elucidated with reference to the examples described hereinafter.

Examples of the disclosure will be described in the following with reference to the following drawings.
- Figure 1: shows an autonomous vehicle in a first traffic situation, wherein the autonomous vehicle comprises a data processing apparatus according to the present disclosure, a computer-readable storage medium according to the present disclosure and a computer program according to the present disclosure, and wherein the autonomous vehicle is operated using a method for operating an autonomous vehicle according to the present disclosure and using a method for determining a collision risk between an autonomous vehicle and a child,
- Figure 2: shows the autonomous vehicle of Figure 1 in a second traffic situation,
- Figure 3: shows the autonomous vehicle of Figures 1 and 2 in a third traffic situation, and
- Figure 4: illustrates steps of the method for operating an autonomous vehicle and the method for determining a collision risk between an autonomous vehicle and a child.

The Figures are merely schematic representations and serve only to illustrate examples of the disclosure. Identical or equivalent elements are in principle provided with the same reference signs.

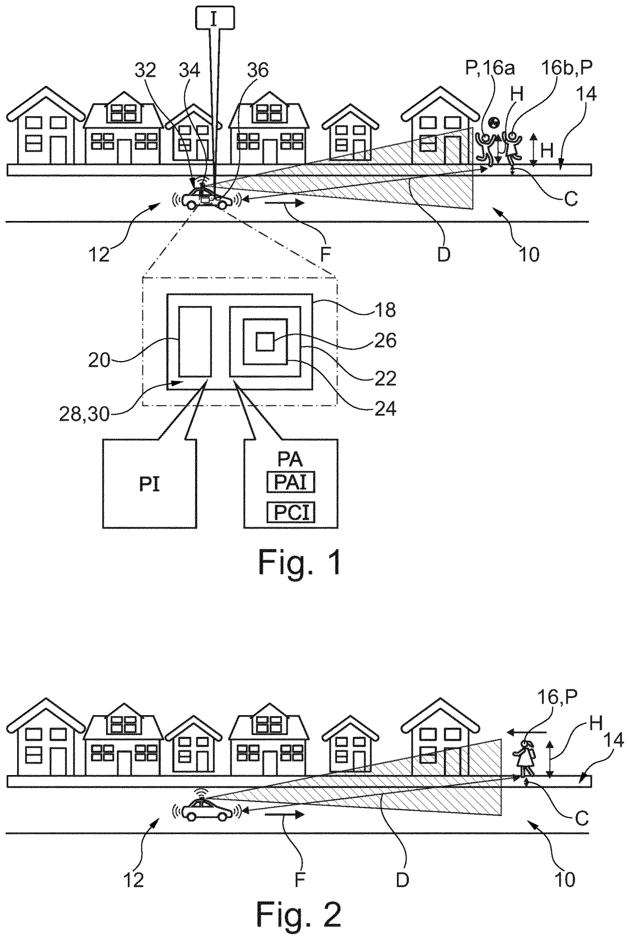

Figure 1 shows a first traffic situation. The traffic situation comprises a road 10 on which an autonomous vehicle 12 is traveling along a direction F.

A sidewalk 14 extends along the road 10 and two pedestrians P, more precisely two children 16a, 16b, are playing on the sidewalk 14.

The autonomous vehicle 12 comprises a data processing apparatus 18.

The data processing apparatus 18 comprises a data processing unit 20 and a data storage unit 22.

The data storage unit 22 comprises a computer-readable storage medium 24.

On the computer-readable storage medium 24, there is provided a computer program 26.

The computer program 26 and, thus, also the computer-readable storage medium 24, comprise instructions, which, when executed by the data processing unit 20 or, more generally, a computer, cause the data processing unit or the computer to carry out a method for operating the autonomous vehicle 12.

Consequently, the data processing unit 20 and the data storage unit 22 form means 28 for carrying out a method for operating an autonomous vehicle 12.

As will be explained in more detail further below, the method for operating an autonomous vehicle 12 comprises a method for determining a collision risk between an autonomous vehicle 12 and the child 16. Thus, the computer program 26 and the computer-readable storage medium 24 also comprise instructions, which, when executed by the data processing unit 20 or, more generally, a computer, cause the data processing unit or the computer to carry out a method for determining a collision risk between an autonomous vehicle 12 and a child 16.

Consequently, the data processing unit 20 and the data storage unit 22 also form means 30 for carrying out a method for determining a collision risk between an autonomous vehicle and a child.

The autonomous vehicle 12 further comprises a vision system 32 comprising an optical camera 34. The vision system 32 and the optical camera 34 are configured to capture images of an environment of the autonomous vehicle 12 while the autonomous vehicle 12 is driving.

The vision system 32 is communicatively connected to the data processing apparatus 18.

The autonomous vehicle 12 additionally comprises an autonomous drive unit 36 being configured to autonomously steer, accelerate and decelerate the autonomous vehicle 12. The autonomous drive unit 36 is represented by a box in Figure 1.

Also the autonomous drive unit 36 and the data processing apparatus 18 are communicatively connected.

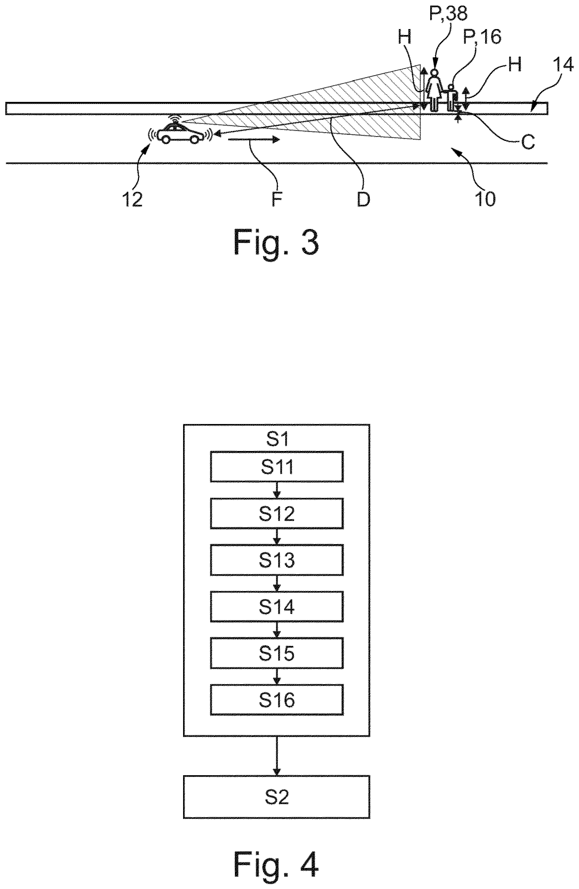

In the first traffic situation of Figure 1, the autonomous vehicle 12 is traveling along direction D on the road 10. At the same time, using the data processing apparatus 18, a method for operating an autonomous vehicle 12 is executed. This will be explained in the following with additional reference to Figure 4.

The method for operating the autonomous vehicle 12 comprises two steps. In a first step S1, a collision risk between the autonomous vehicle 12 and a child 16, in a scenario of Figure 1 the children 16a, 16b, is determined.

In a second step S2, executing a collision mitigation maneuver is triggered, if a presence of a collision risk has been determined in step S1.

When executing the first step S1, the collision risk between the autonomous vehicle 12 and the children 16a, 16b is determined by executing a method for determining a collision risk between an autonomous vehicle 12 and the child 16. In order to distinguish the methods adapts of the method for operating the autonomous vehicle 12 and the method for determining a collision risk between an autonomous vehicle 12 and the child 16, the steps of the method for determining a collision risk between an autonomous vehicle 12 and the child 16 will be designated by S1x.

In a first step S11, the data processing apparatus 18 receives image data I from the vision system 32. In more detail, the data processing apparatus 18 receives image data I captured by the optical camera 34.

In the example of Figure 1, the received image data I comprises a representation of the children 16a, 16b.

Thereafter, in a second step S12, a height H of the children 16a, 16b is determined based on the received image data I. To this end, a height estimation algorithms is executed on the data processing apparatus 18. If, in the example of Figure 1, the height H of both children 16a, 16b is below 1.5 m, the method is continued since the children 16a, 16b are recognized as children. In a case in which the height H of the children 16a, 16b equals or exceeds 1.5 m, the method is abandoned since the children 60a, 16b are considered to be teenagers or adults.

In a next step S13, a pedestrian attribute PA is determined based on the received image data I. Additionally, the determined pedestrian attribute PA is classified as critical or non-critical. The pedestrian attribute PA characterizes the children 16a, 16b.

In the present example, determining the pedestrian attributes PA comprises detecting a face of each of the children 16a, 16b based on the received image data. To this end, a face detection algorithm is executed on the data processing apparatus 18.

In a case in which the faces of both children 16a, 16b are detected in the received image data I, the pedestrian attribute PA is classified as non-critical. Otherwise, i.e. in a case in which the face of at least one of the children 16a, 16b is not detected in the received image data I, the pedestrian attribute PA is classified as critical.

Moreover, determining the pedestrian attribute PA comprises determining a pedestrian activity indicator PAI based on the received image data I. In the present example, determining the pedestrian activity indicator PAI comprises executing a pose estimation algorithms on the data processing apparatus 18. Using such an algorithm, a body pose of the children 16a, 16b may be determined based on the received image data I. Examples of poses are running, playing, walking or standing.

Moreover, the pedestrian attribute PA may be classified based on the body pose. In a case in which the body pose is walking or standing, the pedestrian attribute PA is classified as non-critical. In a case in which the body pose is running or playing, the pedestrian attribute PA is classified as critical.

In the example of Figure 1, the body pose is playing and, thus, the pedestrian attribute PA is classified as critical.

Determining the pedestrian attribute PA also comprises determining a pedestrian company indicator PCI based on the received image data I. The pedestrian company indicator PCI describes whether the detected pedestrian, in the present case the children 16a, 16b, are accompanied by an adult. In the example of Figure 1, this is not the case since a height H of both the children 16a, 16b has been estimated to be inferior to 1.5 m.

In summary, the pedestrian attribute PA which may be classified as critical or non-critical provides an estimation on the level of attention that the detected pedestrian P, in the present example the children 16a, 16b, are paying towards the autonomous vehicle 12. In the example of Figure 1, the determination of the pedestrian attribute PA is based on the outcome of a face detection algorithm, a pose estimation algorithms and the height detection algorithm.

Subsequently, in a fourth step S14, a pedestrian position indicator PI is determined. The pedestrian position indicator PI characterizes a position of the pedestrian P based on the received image data I. In the present example, a position of the children 16a, 16b is determined. Depending on the position, the pedestrian position indicator PI is classified as critical or non-critical.

The present example, the pedestrian position indicator PI comprises two components. A first component relates to a distance D between the at least one pedestrian P and the autonomous vehicle 12. In the present example, this distance is 25 m.

A second component of the pedestrian position indicator relates to a clearance C between the at least one pedestrian P and the road 10 on which the vehicle 12 is travelling. In other words, a distance between the pedestrian P and a curb is determined.

Both the distance D between the autonomous vehicle 12 and the pedestrian P, i.e. the children 16a, 16b, and the clearance C between the pedestrian P, i.e. the children 16a, 16b, and the road 10 is determined based on the received image data I. Based thereon, the pedestrian position indicator is classified as critical if either the determined clearance C is inferior to a predefined clearance threshold or the determined distance D is inferior to a predefined distance threshold.

In the present example, the distance threshold is 30 m. Consequently, the pedestrian position indicator is classified as critical.

In a subsequent fifth step S15, vehicle speed data is received from the autonomous drive unit 36. The received vehicle speed data is compared to a predefined speed threshold which in the present example corresponds to walking speed. A presence of a collision risk may only be determined if the received speed data equals or exceeds the predefined speed threshold, i.e. if the vehicle is traveling faster than walking speed. In a case in which the vehicle travels at walking speed or slower, and absence of a collision risk is inferred and the method is abandoned.

Subsequently, in a sixth step, the presence of a collision risk is determined under three conditions.

The first condition relates to the fact that the determined height H of the pedestrian, i.e. the children 16a, 16b, is inferior to the predefined height threshold. This is the case in the example of Figure 1.

The second condition relates to the fact that the pedestrian attribute PA is classified as critical. This is the case in the present example, since the children 16a, 16b are playing.

The third condition relates to the fact that the pedestrian position indicator PI is classified as critical. This is also the case in the present example.

Consequently, in the traffic situation of Figure 1, a presence of a collision risk is determined.

Thus, in the second step S2 of the method for operating the autonomous vehicle 12, a collision mitigation maneuver is triggered. In the present example, the collision mitigation maneuver comprises triggering a braking maneuver, i.e. slowing down the vehicle 12.

In a case in which at least one of the above conditions is not met, an absence of the collision risk is determined.

Figure 2 shows a second traffic situation. In contrast to the first traffic situation, the second traffic situation comprises only one pedestrian P which is a child 16 walking into a direction against the travelling direction F of the autonomous vehicle 12.

In the following, only the differences over the example of Figure 1 will be explained. Since the autonomous vehicle 12 in the second traffic situation is the same as in the first traffic situation of Figure 1, the details of the autonomous vehicle 12 are not repeated in Figure 2.

In the traffic situation of Figure 2, the pedestrian activity indicator PAI relates to walking.

Moreover, a face of the child 16 has been detected, since the child 16 is walking towards the vehicle 12. Consequently, the pedestrian attribute PA is classified as non-critical.

Based thereon, an absence of a collision risk is determined and no collision mitigation maneuver is necessary.

Figure 3 shows a third traffic situation. The third traffic situation comprises two pedestrians P which are standing on the sidewalk 14. One of the pedestrians P is an adult 38 and the other one is a child 16. The adult 38 accompanies the child 16.

In the following, only the differences over the examples of Figures 1 and 2 will be explained. Since the autonomous vehicle 12 is the same in Figures 1, 2, and 3, the details of the autonomous vehicle 12 are not repeated in Figure 3.

In the example of Figure 3, two pedestrians P are detected. However, only the height H of one of the pedestrian's P, i.e. the child 16, is determined to be inferior to 1.5 m. The height H of the other pedestrian P, i.e. the adult 38, is determined to exceed 1.5 m. Thus, one of the pedestrians P is determined to be a child 16 and the other one is determined to be an adult 38.

This has an influence on the pedestrian attribute PA, more precisely on the pedestrian company indicator PCI.

In the example of Figure 3, the pedestrians P fulfill the proximity criterion of the pedestrian company indicator PCI, since, based on the received image data I, a distance between the pedestrians P is determined to be inferior to 1 meter. Consequently, the child 16 is determined to be accompanied by the adult 38. Based thereon, the pedestrian attribute PA is classified as non-critical. Thus, an absence of a collision risk is determined.

It is noted that in all of the above examples, step S12 of the method for determining a collision risk between the autonomous vehicle 12 and the child 16 comprises determining a height H of the at least one pedestrian P. Alternatively, an age of the at least one pedestrian P may be determined based on the received image data. In this alternative, the first condition for determining the presence of a collision risk relates to the fact that a determined age of the at least one pedestrian P is inferior to a predefined age threshold, e.g. 16 years. In a further alternative, the determination of a height H of the at least one pedestrian P and the determination of an age of the at least one pedestrian may be combined.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: road
- 12: autonomous vehicle
- 14: sidewalk
- 16: child
- 16a: child
- 16b: child
- 18: data processing apparatus
- 20: data processing unit
- 22: data storage unit
- 24: computer-readable storage medium
- 26: computer program
- 28: means for carrying out a method for operating an autonomous vehicle
- 30: means for carrying out a method for determining a collision risk between an autonomous vehicle and a child
- 32: vision system
- 34: optical camera
- 36: autonomous drive unit
- 38: adult

- C: clearance between pedestrian and road
- D: distance between pedestrian and autonomous vehicle
- F: travelling direction of the autonomous vehicle
- H: height
- I: image data
- P: pedestrian
- PA: pedestrian attribute
- PAI: pedestrian activity indicator
- PCI: pedestrian company indicator
- PI: pedestrian position indicator
- S 1: first step of the method for operating an autonomous vehicle
- S 11: first step of the method for determining a collision risk
- S12: second step of the method for determining a collision risk
- S 13: third step of the method for determining a collision risk
- S 14: fourth step of the method for determining a collision risk
- S 15: fifth step of the method for determining a collision risk
- S 16: sixth step of the method for determining a collision risk
- S2: second step of the method for operating an autonomous vehicle

## Claims

1. A method for determining a collision risk between an autonomous vehicle (12) and a child (16, 16a, 16b), the method comprising:
- receiving image data (I) comprising a representation of at least one pedestrian (P) (S11),
- determining a height (H) of the at least one pedestrian (P) based on the received image data (I) and/or determining an age of the at least one pedestrian (P) based on the received image data (I) (S12),
- determining a pedestrian attribute (PA) characterizing the at least one pedestrian (P) based on the received image data (I) and classifying the pedestrian attribute (PA) as critical or non-critical (S13),
- determining a pedestrian position indicator (PI) characterizing a position of the pedestrian (P) based on the received image data (I) and classifying the pedestrian position indicator (PI) as critical or non-critical (S14),
- determining a presence of a collision risk
- if the determined height (H) of the at least one pedestrian (P) is inferior to a predefined height threshold and/or if the determined age of the at least one pedestrian (P) is inferior to a predefined age threshold,
- if the pedestrian attribute (PA) is classified as critical, and
- if the pedestrian position indicator (PI) is classified as critical, or otherwise determining an absence of a collision risk (S16).

2. The method of claim 1, wherein determining a pedestrian attribute (PA) comprises determining a pedestrian activity indicator (PAI) based on the received image data (I).

3. The method of claim 2, wherein determining a pedestrian activity indicator (PAI) comprises determining a body pose of the pedestrian (P) based on the received image data (I).

4. The method of claim 3, further comprising classifying the pedestrian attribute (PA) as critical if the determined body pose is running or playing.

5. The method of claim 3 or 4, further comprising classifying the pedestrian attribute (PA) as non-critical if the determined body pose is walking or standing.

6. The method of any one of the preceding claims, wherein determining the pedestrian attribute (PA) comprises determining a pedestrian company indicator (PCI) based on the received image data (I), wherein the pedestrian attribute (PA) is classified as critical if the pedestrian company indicator (PCI) describes an unaccompanied state and wherein the pedestrian attribute (PA) is classified as non-critical if the pedestrian company indicator (PCI) describes an accompanied state.

7. The method of claim 6, wherein determining a pedestrian company indicator (PCI) comprises determining whether at least two pedestrians (P) are represented in the received image data (I), whether the at least two pedestrians (P) fulfil a proximity criterion, and whether a height (H) of at least one of the pedestrians (P) equals or exceeds the predefined height threshold, wherein the pedestrian company indicator (PCI) describes an accompanied state if the proximity criterion is fulfilled and the height (H) of at least one of the pedestrian (P) equals or exceeds the predefined height threshold.

8. The method of any one of the preceding claims, wherein determining the pedestrian attribute (PA) comprises detecting a face of the at least one pedestrian (P) based on the received image data (I), wherein the pedestrian attribute (PA) is classified as non-critical if the face is detected and wherein the pedestrian attribute (PA) is classified as critical if the face is not detected.

9. The method of any one of the preceding claims, wherein determining the pedestrian position indicator (PI) comprises determining a distance (D) between the at least one pedestrian (P) and the autonomous vehicle (12) based on the received image data (I), wherein the pedestrian position indicator (PI) is classified as critical if the determined distance (D) is inferior to a predefined distance threshold and wherein the pedestrian position indicator (PI) is classified as non-critical if the determined distance (D) equals or exceed the predefined distance threshold.

10. The method of any one of the preceding claims, wherein determining the pedestrian position indicator (PI) comprises determining a clearance (C) between the at least one pedestrian (P) and the road (10) on which the autonomous vehicle (12) is travelling based on the received image data (I), wherein the pedestrian position indicator (PI) is classified as critical if the determined clearance (C) is inferior to a predefined clearance threshold and wherein the pedestrian position indicator (PI) is classified as non-critical if the determined clearance (C) equals or exceed the predefined clearance threshold.

11. The method of any one of the preceding claims, further comprising receiving vehicle speed data describing a travelling speed of the autonomous vehicle (12) or determining a travelling speed of the autonomous vehicle (12) based on the received image data (I), and determining a presence of a collision risk, if the travelling speed exceeds a predefined speed threshold, and otherwise determining an absence of a collision risk (S15).

12. A method for operating an autonomous vehicle (12), the method comprising:
- determining a collision risk using the method of any one of the preceding claims, and
- triggering executing a collision mitigation maneuver, if a presence of a collision risk has been determined.

13. A data processing apparatus (18) comprising means (28, 30) for carrying out at least one of the methods of any one of the preceding claims.

14. A computer program (26) comprising instructions which, when the computer program (26) is executed by a computer, cause the computer to carry out at least one of the methods of claims 1 to 12.

15. A computer-readable storage medium (24) comprising instructions which, when executed by a computer, cause the computer to carry out at least one of the methods of claims 1 to 12.

## Amended claims

### Amended claims in accordance with Rule 137(2) EPC.

1. A method for determining a collision risk between an autonomous vehicle (12) and a child (16, 16a, 16b), the method comprising:
- receiving image data (I) comprising a representation of at least one pedestrian (P) (S11),
- determining a height (H) of the at least one pedestrian (P) based on the received image data (I) and/or determining an age of the at least one pedestrian (P) based on the received image data (I) (S12),
- determining a pedestrian attribute (PA) characterizing the at least one pedestrian (P) based on the received image data (I) and classifying the pedestrian attribute (PA) as critical or non-critical (S13), wherein determining the pedestrian attribute (PA) comprises detecting a face of the at least one pedestrian (P) based on the received image data (I), wherein the pedestrian attribute (PA) is classified as non-critical if the face is detected and wherein the pedestrian attribute (PA) is classified as critical if the face is not detected,
- determining a pedestrian position indicator (PI) characterizing a position of the pedestrian (P) based on the received image data (I) and classifying the pedestrian position indicator (PI) as critical or non-critical (S14),
- determining a presence of a collision risk
- if the determined height (H) of the at least one pedestrian (P) is inferior to a predefined height threshold and/or if the determined age of the at least one pedestrian (P) is inferior to a predefined age threshold,
- if the pedestrian attribute (PA) is classified as critical, and
- if the pedestrian position indicator (PI) is classified as critical, or otherwise determining an absence of a collision risk (S16).

2. The method of claim 1, wherein determining a pedestrian attribute (PA) comprises determining a pedestrian activity indicator (PAI) based on the received image data (I).

3. The method of claim 2, wherein determining a pedestrian activity indicator (PAI) comprises determining a body pose of the pedestrian (P) based on the received image data (I).

4. The method of claim 3, further comprising classifying the pedestrian attribute (PA) as critical if the determined body pose is running or playing.

5. The method of claim 3 or 4, further comprising classifying the pedestrian attribute (PA) as non-critical if the determined body pose is walking or standing.

6. The method of any one of the preceding claims, wherein determining the pedestrian attribute (PA) comprises determining a pedestrian company indicator (PCI) based on the received image data (I), wherein the pedestrian attribute (PA) is classified as critical if the pedestrian company indicator (PCI) describes an unaccompanied state and wherein the pedestrian attribute (PA) is classified as non-critical if the pedestrian company indicator (PCI) describes an accompanied state.

7. The method of claim 6, wherein determining a pedestrian company indicator (PCI) comprises determining whether at least two pedestrians (P) are represented in the received image data (I), whether the at least two pedestrians (P) fulfil a proximity criterion, and whether a height (H) of at least one of the pedestrians (P) equals or exceeds the predefined height threshold, wherein the pedestrian company indicator (PCI) describes an accompanied state if the proximity criterion is fulfilled and the height (H) of at least one of the pedestrian (P) equals or exceeds the predefined height threshold.

8. The method of any one of the preceding claims, wherein determining the pedestrian position indicator (PI) comprises determining a distance (D) between the at least one pedestrian (P) and the autonomous vehicle (12) based on the received image data (I), wherein the pedestrian position indicator (PI) is classified as critical if the determined distance (D) is inferior to a predefined distance threshold and wherein the pedestrian position indicator (PI) is classified as non-critical if the determined distance (D) equals or exceed the predefined distance threshold.

9. The method of any one of the preceding claims, wherein determining the pedestrian position indicator (PI) comprises determining a clearance (C) between the at least one pedestrian (P) and the road (10) on which the autonomous vehicle (12) is travelling based on the received image data (I), wherein the pedestrian position indicator (PI) is classified as critical if the determined clearance (C) is inferior to a predefined clearance threshold and wherein the pedestrian position indicator (PI) is classified as non-critical if the determined clearance (C) equals or exceed the predefined clearance threshold.

10. The method of any one of the preceding claims, further comprising receiving vehicle speed data describing a travelling speed of the autonomous vehicle (12) or determining a travelling speed of the autonomous vehicle (12) based on the received image data (I), and determining a presence of a collision risk, if the travelling speed exceeds a predefined speed threshold, and otherwise determining an absence of a collision risk (S15).

11. A method for operating an autonomous vehicle (12), the method comprising:
- determining a collision risk using the method of any one of the preceding claims, and
- triggering executing a collision mitigation maneuver, if a presence of a collision risk has been determined.

12. A data processing apparatus (18) comprising means (28, 30) for carrying out at least one of the methods of any one of the preceding claims.

13. A computer program (26) comprising instructions which, when the computer program (26) is executed by a computer, cause the computer to carry out at least one of the methods of claims 1 to 11.

14. A computer-readable storage medium (24) comprising instructions which, when executed by a computer, cause the computer to carry out at least one of the methods of claims 1 to 11.
